# EUROPÄISCHE PATENTSCHRIFT

(11) **EP 3 654 305 B1**
(45) Veröffentlichungstag und Bekanntmachung des Hinweises auf die Patenterteilung: **14.02.2024**
(21) Anmeldenummer: 18206092.1
(22) Anmeldetag: 14.11.2018
(51) Int. Cl.: G07G 1/00

(54) **VERKAUFSVORRICHTUNG ZUM SELBST-CHECKOUT**
VENDING MACHINE FOR SELF-CHECKOUT
DISPOSITIF DE VENTE DE LIBRE SERVICE

(43) Veröffentlichungstag der Anmeldung: 20.05.2020
(73) Patentinhaber: Bizerba SE & Co. KG, 72336 Balingen (DE)
(72) Erfinder: Plocher, Thomas, 72172 Sulz am Neckar (DE)
(74) Vertreter: Huber, Meik

(56) Entgegenhaltungen:
- EP-A1- 1 717 772
- EP-A1- 3 147 850
- WO-A2-2009/066161
- CN-A- 108 197 931
- US-A1- 2006 233 624
- US-A1- 2018 060 618

## Beschreibung

Die vorliegende Erfindung betrifft eine Verkaufsvorrichtung zum Selbst-Checkout in einem Supermarkt. Mit der Verkaufsvorrichtung wird der Inhalt eines Einkaufswagens oder Einkaufskorbes vor einem Bezahlvorgang verifiziert. Die Erfindung betrifft ferner ein System aus Verkaufsvorrichtungen, Einkaufswagen und/oder Einkaufkörben und einem Netzwerk sowie ein Verfahren zum Betrieb einer Verkaufsvorrichtung.

Die US 9 773 386 B2 zeigt ein Selbst-Checkout System für einen Supermarkt, bei dem ein Kunde jeden Artikel, den er in einem Einkaufswagen ablegt, mit einem Handscanner einscannt. Die Artikel werden mit dem zum Handscanner zugehörigen Einkaufswagen verknüpft. Beim Checkout wird durch den Kassierer eine eindeutige Nummer des Einkaufswagens eingescannt, wobei der Einkaufswagen mit dem Handscanner und somit mit der durch den Handscanner erfassten Liste von Artikeln verknüpft ist. So wird durch den Kassierer eine Liste der Artikel und ein dementsprechend zu bezahlender Betrag bestimmt. Druckschrift EP 1 717 772 A1 bezieht sich auf ein Self-Checkout Terminal mit einem Sicherheitstunnel, in dem ein Einkaufswagen platziert und die im Einkaufswagen vorhandenen Warenartikel mittels eines RFID-Scanners, Gewichtsmessungen und von einer Kamera erfassten Bildern erkannt werden. Ferner wird ein Detektor eingesetzt um feststellen zu können, ob der Einkaufswagen korrekt platziert wurde. Druckschrift WO 2009/066161 A2 offenbart ein Check-Out System, worin der Benutzer die gewünschten Produkte mit einem Handscanner erfasst und in einen Einkaufswagen platziert. Die Codes der erfassten Produkte werden beim Check-Out an einen Computer übertragen, um die entsprechenden Produktgewichte zu ermitteln. Gleichzeitig wird eine Gewichtsfeststellung des Einkaufswagens durchgeführt und ein Freigabesignal in Falle einer Übereinstimmung des gemessenen Gewichts mit dem Sollgewicht durchgeführt. Das Leergewichts des Einkaufswagens wird durch ein Auslesen einer Einkaufswagenkennung und Suche nach einem zugeordneten Gewichtswertes in einer Datenbank ermittelt. Druckschrift EP 3 147 850 A1 bezieht sich auf ein Check-Out System, in dem der Einkäufer Produkte mittels eines Handheld-Gerätes scannt. Für diese Produkte werden die entsprechenden Gewichtswerte ermittelt, entweder durch Auslesen von in einer Datenbank hinterlegten Werte oder durch Codierung der Gewichtswerte in den Scan-Codes der Produkte. Das Gewicht des Einkaufswagens wird entweder an einer Messstation für leere Einkaufswägen oder durch Abrufen eines vorab gespeicherten Gewichtswertes festgestellt. Anschließend führt das System ein Audit durch, worin das Gewicht des befüllten Einkaufswagens mit dem Sollgewicht verglichen wird. Druckschrift US 2006/233624 A1 offenbart einen Greifer, der mit einem Einkaufswagen gekoppelt werden kann um diesen zu fixieren. Druckschrift CN 108 197 931 A bezieht sich auf ein Check-Out System welches eine Messeinrichtung zur Feststellung des Gewichts eines Einkaufswagens umfasst und ein RFID-Lesegerät, um eine Einkaufswagenkennung in Form eines RFID-Code zu bestimmen. Nach Platzieren des Einkaufswagens in eine mit einer Schranke versehenen Checkout-Gasse, wird die ausgelesene Kennung und das Wagengewicht an einen Server übermittelt, der daraufhin das Auslesen von Produkten veranlasst, die von einem am Einkaufswagen angebrachten RFID-Lesegerätes erfasst wurden. Ein Freigabesignal wird dann generiert, wenn das Soll-Gewicht der Produkte dem gemessenen Gewicht entspricht. Druckschrift US 2018/060618 A1 offenbart ein Einkaufssystem, welches einen Einkaufswagen mit einem Barcodescanner und ein mit einer Tür versehenes Kassensystem umfasst. Nachdem der Kunde die gewünschten Produkte mit dem Scanner erfasst und den Einkaufswagen zum Kassensystem bewegt hat, wird ein am Einkaufswagen angebrachter optischer Code gelesen, der zuvor mit dem Kunden verknüpft wurde. Ein Server empfängt die gescannten Produkte sowie vom Kassensystem erfasste Bilder des Einkaufswagens, um eine Sicherheitsüberprüfung vorzunehmen.

Aufgabe der Erfindung ist es eine Verkaufsvorrichtung zu schaffen, die den Checkout Prozess in einem Supermarkt vereinfacht und insbesondere den Prozess des Bezahlens im Falle von durch den Kunden selbst eingescannten Artikeln vereinfacht und automatisiert.

Diese Aufgabe wird durch ein System zum Selbst-Checkout von Waren nach Anspruch 1 und ein Verfahren zum Betrieb einer Verkaufseinrichtung zum Selbst-Checkout nach Anspruch 10 gelöst.

Erfindungsgemäß wird eine Verkaufsvorrichtung zum Selbst-Checkout von Waren in einem Ladengeschäft vorgeschlagen. Bei dem Ladengeschäft handelt es sich insbesondere um einen Supermarkt. Die Verkaufsvorrichtung umfasst eine Steuerung zum Steuern der Verkaufsvorrichtung. Die Verkaufsvorrichtung umfasst ferner eine Kommunikationsvorrichtung zum Empfangen von Daten aus einem Netzwerk und zum Senden von Daten in ein Netzwerk. Die Verkaufsvorrichtung umfasst mindestens eine Kamera zum Erstellen eines Bildes von mindestens einer Ansicht einer offenen Seite eines Einkaufswagens oder eines Einkaufskorbes. Die Verkaufsvorrichtung umfasst eine Auflageplatte, die dazu ausgebildet ist, dass der Einkaufswagen oder der Einkaufskorb darauf abgestellt werden kann. Im Falle einer Verkaufsvorrichtung für Einkaufswagen kann der Einkaufswagen auf die Auflageplatte aufgefahren werden. Sie ist somit weitestgehend bündig mit dem Fußboden und befindet sich zum Beispiel in einer von der Größe her angepassten Ausnehmung im Fußboden oder ist mit einer kleinen Rampe versehen. Im Fall einer Verkaufsvorrichtung für einen Einkaufskorb dient die Auflageplatte als Tisch auf einer Höhe, die einem Bediener erlaubt, den Korb ergonomisch angenehm auf der Auflageplatte abzustellen. Die Verkaufsvorrichtung umfasst einen Detektor. Der Detektor ist dazu ausgebildet, das Vorhandensein eines Einkaufswagens oder eines Einkaufskorbes auf der Auflageplatte zu detektiert. Bei dem Detektor handelt es sich in einer Ausführungsform um einen Kontaktschalter, eine Lichtschranke, ein optisches System, einen Laser- oder Ultraschall-Entfernungsmesser, einen Gewichtssensor oder ein magnetisches System. Des Weiteren umfasst die Verkaufsvorrichtung einen Sensor, der eine eindeutige Identifikationsnummer des Einkaufswagens oder des Einkaufskorbes ermittelt. In einer Ausführungsform ist die eindeutige Identifikationsnummer des Einkaufswagens oder des Einkaufskorbes auf einem Datenträger gespeichert, der sich am Einkaufswagen oder am Einkaufskorb befindet. Bei dem Datenträger handelt es sich in einer Ausführungsform um eine flache Platte, auf der ein Barcode oder QR-Code aufgedruckt ist oder um einen RFID- oder NFC-Datenträger. Der Datenträger ist im Falle eines Einkaufswagens in einer Ausführungsform am Wagenfuß, an der Front des Einkaufswagens oder an einer Seitenwand des Einkaufswagens angebracht. Der Datenträger ist im Fall eines Einkaufskorbes in einer Ausführungsform am Boden oder an der Seite des Einkaufskorbes angebracht. Der Sensor ermittelt die Identifikationsnummer automatisch, wenn der Detektor einen Einkaufswagen oder einen Einkaufskorb auf der Auflageplatte detektiert. Bei dem Sensor handelt es sich in einer Ausführungsform um einen Barcode-Scanner, um einen QR-Code-Scanner oder um eine RFID- oder NFC-Lesevorrichtung. In einer Ausführungsform handelt es sich bei dem Sensor um eine RFID- oder NFC-Lesevorrichtung, die zeitgleich das Vorhandensein eines Einkaufswagens oder eines Einkaufskorbes auf der Auflageplatte detektiert und den RFID- oder NFC-Datenträger des Einkaufswagens oder des Einkaufskorbes ausliest. Somit sind in dieser Ausführungsform Detektor und Sensor in einem einzigen Bauteil realisiert.

In einer Ausführungsform weist die Auflageplatte eine Ruheposition für den Einkaufswagen oder den Einkaufskorb auf. Der Sensor ist geometrisch im Vergleich zur Auflageplatte derart in der Verkaufsvorrichtung angebracht, dass der Sensor die eindeutige Identifikationsnummer von dem Datenträger des Einkaufswagens oder Einkaufskorbes automatisch ausliest, sobald der Einkaufswagen oder der Einkaufskorb die Ruheposition auf der Auflageplatte erreicht hat. In anderen Worten, befindet sich ein Einkaufswagen oder ein Einkaufskorb in der Ruheposition auf der Auflageplatte, so sind sich Sensor und Datenträger derart nahe, dass der Sensor den Datenträger auslesen kann. Ist der Datenträger zum Beispiel ein Barcode oder QR-Code, so befindet sich der Sensor dann in einer Entfernung zum Barcode oder QR-Code, dass ein Lesen des Codes möglich ist. Ist der Datenträger ein RFID- oder NFC-Datenträger, so befindet sich der Sensor nahe genug am Datenträger, um ihn auszulesen.

In einer Ausführungsform umfasst die Verkaufsvorrichtung eine Waage zum Wiegen eines Einkaufswagens oder eines Einkaufskorbes. Eine Lastplatte der Waage ist durch die Auflageplatte ausgebildet. Die Waage ermittelt einen Gewichtswert, wenn der Detektor einen Einkaufswagen oder einen Einkaufskorb auf der Auflageplatte detektiert. In einer Ausführungsform ermittelt die Waage den Gewichtswert automatisch, wenn der Einkaufswagen oder der Einkaufskorb durch den Detektor detektiert wird und/oder sobald der Einkaufswagen oder der Einkaufskorb die Ruheposition auf der Auflageplatte erreicht. Die Waage speichert den Gewichtswert in einen Gewichtswertspeicher.

In einer Ausführungsform umfasst die Verkaufsvorrichtung eine Lesevorrichtung, die einen Gewichtswert aus einem Einkaufswagen oder einem Einkaufskorb, der auf der Auflageplatte abgestellt ist, ausliest und an den Gewichtswertspeicher übergibt. Ein Einkaufswagen oder ein Einkaufskorb hat in dieser Ausführungsform eine eingebaute Waage und bestimmt den Gewichtswert der Gegenstände, die sich im Einkaufswagen oder im Einkaufskorb befinden. Ein Einkaufswagen oder ein Einkaufskorb in dieser Ausführungsform hat einen elektronischen Datenträger, zum Beispiel einen RFID- oder NFC-Datenträger, worauf der Gewichtswert abgespeichert ist. Die Lesevorrichtung der Verkaufsvorrichtung liest den Gewichtswert von diesem Datenträger aus. In einer Ausführungsform ist die Lesevorrichtung der Sensor der Verkaufsvorrichtung, die sowohl den Gewichtswert wie auch die Identifikationsnummer des Einkaufswagens oder des Einkaufskorbes ausliest.

In einer Ausführungsform sendet die Kommunikationseinrichtung die Identifikationsnummer des Einkaufswagens oder des Einkaufskorbes, mindestens ein Kamerabild mindestens einer offenen Seite des Einkaufswagens oder des Einkaufskorbes und/oder das Gewicht aus dem Gewichtswertspeicher an das Netzwerk. Die Kommunikationsvorrichtung empfängt vom Netzwerk ein zur Identifikationsnummer zugehöriges Freigabesignal. Das Netzwerk ist in einer Ausführungsform ausgebildet als ein Intranet in einem Supermarkt, in dem sich die Verkaufsvorrichtung befindet und die Identifikationsnummer und mindestens ein Kamerabild und/oder das Gewicht werden an einen Server gesendet, der eine Verifikationseinheit umfasst und ein Freigabesignal erzeugt. In einer Ausführungsform ist das Netzwerk eine Computing Cloud, das heißt ein Cloud Netzwerk, an die die Identifikationsnummer und mindestens ein Kamerabild und/oder der Gewichtswert gesendet werden und die ein Freigabesignal erzeugt.

In einer Ausführungsform umfasst die Verkaufsvorrichtung eine Bezahleinheit zum Bezahlen, insbesondere zum bargeldlosen Bezahlen.

In einer Ausführungsform umfasst die Verkaufsvorrichtung eine Freigabeeinheit. Die Freigabeeinheit steuert einen Freigabeindikator, der eine Freigabe anzeigt, falls ein zur Identifikationsnummer zugehöriges Freigabesignal vom Netzwerk empfangen wurde. Der Freigabeindikator zeigt eine Nicht-Freigabe an, falls ein zur Identifikationsnummer zugehöriges Freigabesignal nicht empfangen wurde. In einer Ausführungsform wird der Freigabeindikator auf der Bezahleinheit angezeigt.

In einer Ausführungsform steuert die Freigabeeinheit einen zweistufigen Freigabeindikator. Die erste Stufe des Freigabeindikators zeigt eine Freigabe an, falls ein zur Identifikationsnummer zugehöriges Freigabesignal vom Netzwerk empfangen wurde. Die erste Stufe des Freigabeindikators zeigt eine Nicht-Freigabe an, falls ein zur Identifikationsnummer zugehöriges Freigabesignal nicht empfangen wurde. Die zweite Stufe des Freigabeindikators zeigt eine Freigabe an, falls ein Bezahlvorgang erfolgreich abgeschlossen wurde. Die zweite Stufe des Freigabeindikators zeigt eine Nicht-Freigabe an, falls ein Bezahlvorgang nicht erfolgreich abgeschlossen wurde. Mindestens einer der beiden Freigabeindikatoren wird auf der Bezahleinheit angezeigt. In einer Ausführungsform ist die Bezahleinheit ein Terminal zum bargeldlosen Bezahlen mittels Kreditkarte oder EC Karte. Nach erfolgreicher elektronischer Bezahlung wird der Abschluss der Transaktion in der Bezahleinheit angezeigt. In einer Ausführungsform ist die Bezahleinheit eine Vorrichtung zum Mobilen Bezahlen, zum Beispiel mit einem Smartphone und einer entsprechenden App. In einer Ausführungsform erlaubt eine App des Smartphones sowohl das Einscannen der Produkte während des Einkaufs sowie das Mobile Bezahlen.

In einer Ausführungsform wird die Freigabe durch das Aufleuchten eines Leuchtmittels angezeigt. Die Nicht-Freigabe wird dadurch angezeigt, dass das Leuchtmittel nicht aufleuchtet. In einer Ausführungsform werden Freigabe und Nicht-Freigabe durch Symbole oder Text auf einem Bedienfeld, einer Anzeigevorrichtung oder einer Ein/Ausgabeeinrichtung der Verkaufsvorrichtung oder der Bezahleinheit angezeigt.

In einer Ausführungsform umfasst die Verkaufsvorrichtung einen Greifer, der den Einkaufswagen oder den Einkaufskorb auf der Auflageplatte automatisch fixiert, wenn der Einkaufswagen oder Einkaufskorb in der Verkaufsvorrichtung durch den Detektor detektiert wird. In einer Ausführungsform fixiert der Greifer den Einkaufswagen oder den Einkaufskorb in der Ruheposition auf der Auflageplatte. Der Greifer gibt den Einkaufswagen oder Einkaufskorb erst frei, wenn die Freigabeeinheit ein zur Identifikationsnummer zugehöriges Freigabesignal vom Netzwerk empfangen hat und/oder wenn die Bezahleinheit das erfolgreiche Beenden eines Bezahlvorgangs festgestellt hat.

Erfindungsgemäß wird ein System zum Selbst-Checkout von Waren in einem Ladengeschäft vorgeschlagen. In einer Ausführungsform ist das Ladengeschäft ein Supermarkt. Das System umfasst eine Vielzahl von Einkaufswagen und/oder Einkaufskörben. Das System umfasst ferner mindestens eine erfindungsgemäße Verkaufsvorrichtung. Jede Verkaufsvorrichtung ist über deren Kommunikationsvorrichtung mit einem Netzwerk verbunden. In einer Ausführungsform ist das Netzwerk eine Computing Cloud, das heißt ein Cloud Netzwerk. In einer Ausführungsform ist das Netzwerk ein lokales Netzwerk des Ladengeschäfts. In einer Ausführungsform ist das Netzwerk ein öffentliches Netzwerk. Das Netzwerk umfasst eine Verifikationseinheit, die ein Freigabesignal erzeugt, falls eine zu einer von der Verkaufsvorrichtung gesendeten Identifikationsnummer zugehörige Liste von Waren mit zugehörigen von der Verkaufsvorrichtung übertragenen Bildern und Gewichtswerten übereinstimmt. Die Waren, die ein Bediener während seines Einkaufs im Ladengeschäft auswählt, scannt er mithilfe eines mobilen Terminals ein. In einer Ausführungsform ist das mobile Terminal ein Smartphone mit einer entsprechenden App. Dieses mobile Terminal sendet die Information über die eingescannten Waren, einzeln oder als Liste, über ein Netzwerk an die Verifikationseinheit. So wird eine Liste von Waren generiert, die sich in dem Einkaufswagen oder in dem Einkaufskorb befinden müssten. In einer Ausführungsform ist das Netzwerk ein Mobilfunknetz, in dem das Smartphone angemeldet ist.

Erfindungsgemäß wird ein Verfahren zum Betrieb einer Verkaufsvorrichtung zum Selbst-Checkout in einem Ladengeschäft, insbesondere in einem Supermarkt, vorgeschlagen. In einem Schritt wird ein Einkaufswagen oder ein Einkaufskorb auf einer Auflageplatte mit einem Detektor detektiert. In einem weiteren Schritt wird eine eindeutige Identifikationsnummer des Einkaufswagens oder des Einkaufskorbes mit einem Sensor ermittelt. In einer Ausführungsform werden die beiden Schritte zeitgleich, insbesondere mit dem gleichen Sensor ausgeführt. In einem weiteren Schritt wird mindestens ein Bild von mindestens einer Ansicht einer offenen Seite des Einkaufswagens oder des Einkaufskorbes mit einer Kamera erstellt. In einem weiteren Schritt sendet eine Kommunikationsvorrichtung die eindeutige Identifikationsnummer und das mindestens eine Bild der mindestens einen offenen Seite des Einkaufswagens oder des Einkaufskorbes an ein Netzwerk. In einer Ausführungsform ist das Netzwerk eine Computing Cloud, das heißt ein Cloud Netzwerk. In einer Ausführungsform ist das Netzwerk ein lokales Netzwerk. In einer Ausführungsform ist das Netzwerk ein öffentliches Netzwerk. In einem weiteren Schritt empfängt die Kommunikationsvorrichtung aus dem Netzwerk ein zu der eindeutigen Identifikationsnummer zugehöriges Freigabesignal.

Das Verfahren hat den Vorteil, dass das Erkennen und verifizieren des Inhalts des Einkaufswagens oder des Einkaufskorbes automatisch abläuft. Der Bediener muss nicht den Einkaufswagen oder den Einkaufskorb an der Verkaufsvorrichtung anmelden. Er muss auch nicht den Produktscanner mit der Verkaufsvorrichtung synchronisieren. Somit ist das Verfahren nicht fehleranfällig und zeiteffizient.

In einer Ausführungsform umfasst das Verfahren das automatische Ermitteln eines Gewichtswertes des Einkaufswagens oder des Einkaufskorbes mit einer Waage, deren Lastplatte die Auflageplatte ist.

In einer Ausführungsform umfasst das Verfahren das Auslesen eines Gewichtswertes aus einem Datenträger des Einkaufswagens oder dem Einkaufskorbes, der auf der Auflageplatte abgestellt ist.

In einer Ausführungsform umfasst das Verfahren das Anzeigen einer Freigabe mit einem zweistufigen Freigabeindikator, wobei die erste Stufe des Freigabeindikators eine Freigabe anzeigt, falls ein zur Identifikationsnummer zugehöriges Freigabesignal vom Netzwerk empfangen wurde und die erste Stufe des Freigabeindikators eine Nicht-Freigabe anzeigt, falls ein zur Identifikationsnummer zugehöriges Freigabesignal nicht empfangen wurde. Die zweite Stufe des Freigabeindikators zeigt eine Freigabe an, falls ein Bezahlvorgang erfolgreich abgeschlossen wurde und die zweite Stufe des Freigabeindikators zeigt eine Nicht-Freigabe an, falls ein Bezahlvorgang nicht erfolgreich abgeschlossen wurde. In einer Ausführungsform umfasst das Verfahren das Anzeigen einer Freigabe mit einem einfachen Freigabeindikator, der nur die erste Stufe anzeigt.

In einer Ausführungsform umfasst das Verfahren das automatische Fixieren des Einkaufswagens oder des Einkaufskorbes auf der Auflageplatte mit einem Greifer. Der Einkaufswagen oder der Einkaufskorb wird insbesondere in einer Ruheposition auf der Auflageplatte fixiert. In einem Schritt wird der Einkaufswagen oder der Einkaufskorb durch den Greifer freigegeben, wenn die Freigabeeinheit ein zur Identifikationsnummer zugehöriges Freigabesignal vom Netzwerk empfangen hat. In einer Ausführungsform wird der Einkaufswagen oder der Einkaufskorb erst freigegeben, wenn die Freigabeeinheit ein zur Identifikationsnummer zugehöriges Freigabesignal vom Netzwerk empfangen hat und wenn die Bezahleinheit das erfolgreiche Beenden eines Bezahlvorgangs festgestellt hat.

Einige Ausführungsformen der Erfindung sind in den Zeichnungen beispielhaft gezeigt und nachfolgend beschrieben. Es zeigen, jeweils in schematischer Darstellung:
- Fig. 1: eine erfindungsgemäße Verkaufsvorrichtung für einen Einkaufswagen in einer ersten Ausführungsform,
- Fig. 2: a und b: eine erfindungsgemäße Verkaufsvorrichtung für einen Einkaufswagen in einer zweiten Ausführungsform,
- Fig. 3: a: eine erfindungsgemäße Verkaufsvorrichtung nach einer dritten Ausführungsform für einen Einkaufskorb, und b: einen Einkaufskorb für eine erfindungsgemäße Verkaufsvorrichtung,
- Fig. 4: ein System zum Selbst-Checkout in einem Ladengeschäft, und
- Fig. 5: ein erstes Verfahren zum Betrieb einer erfindungsgemäßen Verkaufsvorrichtung.

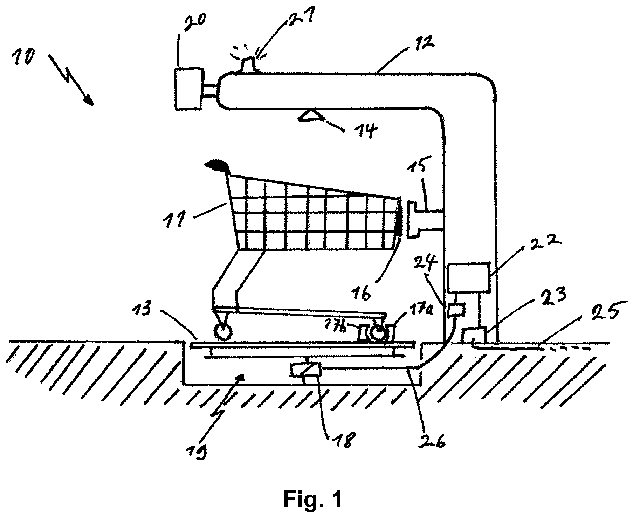

Figur 1 zeigt eine erfindungsgemäße Verkaufsvorrichtung 10 in einer ersten Ausführungsform. Die Verkaufsvorrichtung 10 umfasst ein Gestell 12 unter das ein Einkaufswagen 11 geschoben werden kann. Der Einkaufswagen 11 hat eine definierte Position (Ruheposition) unter dem Gestell 12 auf einer Auflageplatte 13. Die Auflageplatte 13 ist eine Lastplatte einer Waage und mit der Krafteinleitungsseite einer oder mehrerer Wägezellen 18 mechanisch verbunden. Die Waage bestimmt das Gesamtgewicht des Einkaufswagens 11 mit seinem Inhalt. Das Gestell 12 umfasst weiter mindestens eine Kamera 14, die zum Erstellen von mindestens eines Bildes einer Ansicht einer offenen Seite des Einkaufswagens 11 ausgebildet ist. Bei einem Einkaufswagen 11 ist normalerweise die obere Seite offen. Eine offene Seite im Sinne dieser Offenbarung ist jedoch auch zum Beispiel ein Seitenteil des Einkaufswagens, dass aus transparentem Material besteht. Im Rahmen der Erfindung soll als offene Seite ebenfalls gelten, wenn der Einkaufswagen aus einem grobmaschigen Metallgitter besteht, durch das hindurch eine Bildaufnahme des Inhalts des Einkaufswagens gemacht werden kann. Nicht als offene Seite ist im Rahmen dieser Offenbarung zu verstehen, wenn die Seite eines Einkaufswagens aus nicht transparentem Kunststoff besteht oder durch eine nicht transparente Werbetafel verdeckt ist. Das Gestell 12 umfasst einen Sensor 15, der eine eindeutige Identifikationsnummer des Einkaufswagens 11 ermittelt. Die eindeutige Identifikationsnummer ist fest an einem Datenträger 16 des Einkaufswagens 11 angebracht. Ist der Datenträger 16 zum Beispiel eine flache Platte auf der ein Barcode oder QR-Code aufgebracht ist, so ist der Sensor 15 ein Barcode Lesegerät oder QR-Code Lesegerät und befindet sich, wenn sich der Einkaufswagen 11 in der Ruheposition befindet, in einer Entfernung zum Barcode oder QR-Code, die das Lesen des Codes erlaubt. Ist der Datenträger 16 ein RFID- oder NFC-Datenträger, so ist der Sensor 15 ein RFID-Lesegerät oder NFC-Lesegerät und befindet nahe genug am Datenträger 16, um ihn auszulesen, wenn der Einkaufswaagen sich in der Ruheposition befindet. Das Gestell 12 umfasst einen Detektor, der das Vorhandensein eines Einkaufswagens 11 detektiert. Sowohl der Sensor 15 wie auch die Wägezelle 18 können als Detektor dienen. Des Weiteren kann der Detektor als separater Detektor wie zum Beispiel eine Lichtschranke ausgebildet sein. Die Verkaufsvorrichtung 10 umfasst einen Greifer 17a, 17b, der den Einkaufswagen auf der Auflageplatte 13 automatisch fixiert und in der Ruheposition hält, sobald der Detektor einen Einkaufswagen auf der Auflageplatte 13 detektiert. Die Wägezelle 18 ist mit einer Gewichtswertverarbeitungsvorrichtung 24 verbunden, die aus den Signalen der Wägezelle 18 oder der Wägezellen 18 einen Gewichtswert des Einkaufswagens 11 ermittelt. Die Gewichtswertverarbeitungsvorrichtung 24 umfasst einen Gewichtswertspeicher zum Speichern des Gewichtswertes. Die mindestens eine Kamera 14, der Sensor 15 und die Gewichtswertverarbeitungsvorrichtung 24 sind mit einer Steuerung 22 verbunden und übergeben die ermittelten Daten an die Steuerung 22. Die Steuerung 22 ist mit einer Kommunikationsvorrichtung 23 verbunden, über die die Steuerung 22 Daten wie Bilder, Identifikationsnummer und Gewicht an ein Netzwerk 25 übermittelt und mindestens ein Freigabesignal vom Netzwerk 25 empfängt. Die Verkaufsvorrichtung umfasst eine Ein-/Ausgabeeinheit 20, mit der ein Bediener mit der Verkaufsvorrichtung 10 interagieren kann. Die Ein-/Ausgabeeinheit 20 umfasst ebenfalls eine Bezahleinheit, an der vorzugsweise bargeldlos bezahlt werden kann. Auf der Ein-/Ausgabeeinheit 20 zeigt ein erster Freigabeindikator eine Freigabe an, falls ein zur Identifikationsnummer zugehöriges Freigabesignal vom Netzwerk 25 empfangen wird. Das Netzwerk schickt ein derartiges Freigabesignal, falls die von der Kommunikationseinheit 23 ins Netzwerk 25 gesendeten Daten, bestehend aus Gewicht, einem oder mehreren Bildern von offenen Seiten des Einkaufswagens 11 und Identifikationsnummer, bei einem in dem Netzwerk 25, 63, zum Beispiel in einem Cloud-Netzwerk (Computing Cloud) 25, 63, ausgeführten Verifikationsprozess verifiziert werden konnten. Die Ein-/Ausgabeeinheit 20 zeigt mit einem zweiten Freigabeindikator eine Freigabe an, falls ein Bezahlvorgang erfolgreich abgeschlossen wurde. Werden die oben genannten Bedingungen nicht erfüllt, so wird der entsprechende erste und/oder zweite Freigabeindikator nicht angezeigt oder diese Freigabeindikatoren zeigen eine Nicht-Freigabe an. Die Freigabeeinheit ist Teil der Steuerung 22. Die Anzeige des ersten und/oder zweiten Freigabeindikators kann zusätzlich oder alternativ auch durch eine Freigabeanzeigevorrichtung 21, zum Beispiel in Form eines Lichtsignals, angezeigt werden. Die Freigabeanzeigevorrichtung 21 ist am Gestell 12 angebracht. Hat sowohl eine erfolgreiche Verifikation im Netzwerk 25, 63 stattgefunden, wie auch ein erfolgreicher Bezahlvorgang, so öffnet gleichzeitig mit Anzeige des zweiten Freigabeindikators die Steuerung 22 den Greifer 17a, 17b und gibt den Einkaufswagen 11 wieder frei. Der Bediener kann ab diesem Zeitpunkt den Einkaufswagen 11 unter dem Gestell 12 hervorziehen und den Supermarkt verlassen. Das Festhalten des Einkaufswagens 11 unter dem Gestell 12 mithilfe des Greifers 17a, 17b führt dazu, dass der Kunde nicht aus Versehen schon den Einkaufswagen 11 Richtung Ausgang des Supermarkts schiebt, solange der Verifikationsprozess oder der Bezahlvorgang noch nicht abgeschlossen ist.

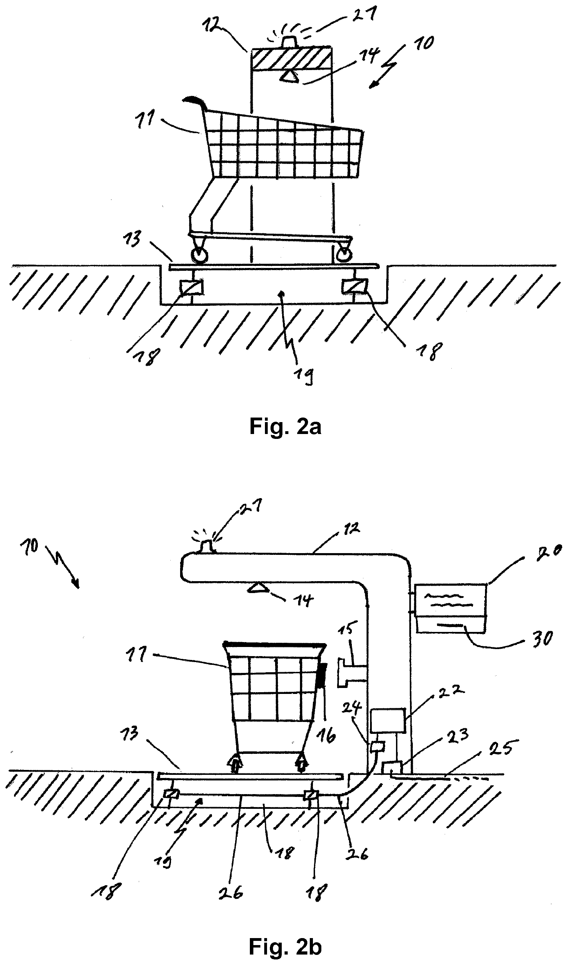

Während Fig. 1 eine Verkaufsvorrichtung 10 zeigt, bei der der Einkaufswagen 11 vorwärts unter das Gestell 12 geschoben wird und nach Abschluss des Bezahlvorgangs rückwärts unter dem Gestell 12 hervorgezogen wird, zeigen Fig. 2a und 2b eine erste Ansicht und eine zweite Ansicht von einer Verkaufsvorrichtung 10 in einer zweiten Ausführungsform, bei der der Einkaufswagen 11 unter der Verkaufsvorrichtung 10 durchgeschoben wird. Das Gestell 12 ragt seitlich über den Einkaufswagen 11. Bei der in Fig. 2a und 2b gezeigten Verkaufsvorrichtung 10 handelt es sich um eine Durchfahrtsanordnung. Um Wiederholungen zu vermeiden, wird bei der Beschreibung der zweiten Ausführungsform im Folgenden nur noch auf die Unterschiede im Vergleich zur ersten Ausführungsform eingegangen. Für die weiteren Merkmale wird auf die Beschreibung zu Fig. 1 verwiesen.

Fig. 2a und 2b zeigen beispielhaft, dass die Auflageplatte 13 auf vier Wägezellen 18 abgestützt ist. Dies gibt der Auflageplatte 13 mehr Stabilität und sorgt für ein genaueres Wiegeergebnis. Der Fachmann versteht, dass auch die erste Ausführungsform mit vier Wägezellen 18 umgesetzt werden kann und dass auch die zweite Ausführungsform mit nur einer Wägezelle 18 umgesetzt werden kann. In der zweiten Ausführungsform ist der Datenträger 16 seitlich am Einkaufswagen 11 angebracht, so das er, sofern sich der Einkaufswagen 11 in der Ruheposition befindet, einen definierten Abstand zum Sensor 15 hat. Die Ein-/Ausgabeeinheit 20 ist wie in Fig. 2b gezeigt seitlich am Gestell 12 angebracht. Die Bezahleinheit 30 ist in die Ein-/Ausgabeeinheit 20 integriert. Der Bediener schieb den Einkaufswagen 11 seitlich unter das Gestell 12 und die Ein-/Ausgabeeinheit 20 befindet sich dann für den Bediener in einer ergonomischen Position. Fig. 2a und 2b zeigen der Übersichtlichkeit wegen keinen Greifer, wobei der Fachmann versteht, dass der Greifer gleich wie in der ersten Ausführungsform auf der Auflageplatte angebracht sein kann. Eine alternative Möglichkeit eine Ruheposition zu definieren ist zum Beispiel in Fahrtrichtung am Ende der Auflageplatte 13 ein Anschlag, der Teil der Auflageplatte 13 ist und über die Auflageplatte ausgefahren und abgesenkt werden kann. Bei ausgefahrenem Anschlag schiebt der Bediener das Vorderrad des Einkaufswagens bis zu dem Anschlag. Der Anschlag gibt durch ein Absenken unter die Höhe der Auflageplatte 13 die Weiterfahrt des Einkaufswagens 11 erst dann frei, wenn sowohl Verifikation als auch Bezahlvorgang erfolgreich abgeschlossen sind. Ist der Greifer 17a, 17b oder der Anschlag in die Auflageplatte 13 integriert, so kann kein Kraftnebenschluss entstehen und es entstehen keine Nachteile bei der Gewichtsbestimmung.

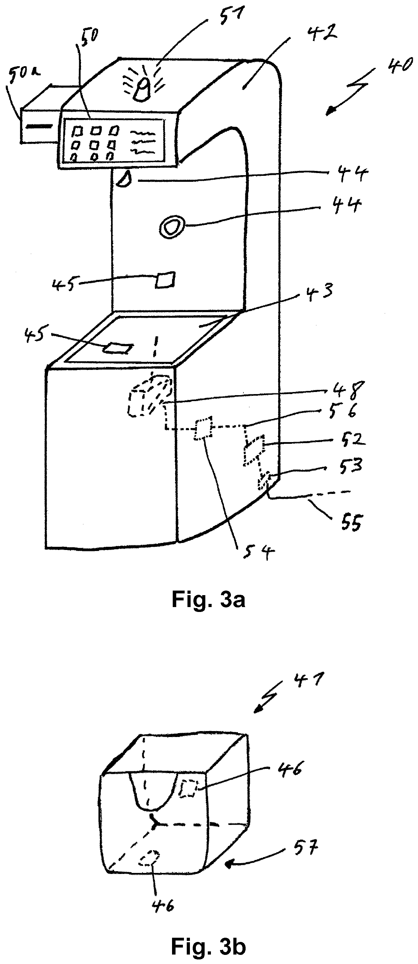

Fig. 3a zeigt eine Verkaufsvorrichtung 40 in einer dritten Ausführungsform. Diese Ausführung ist geeignet, um den Inhalt eines Einkaufskorbes 41 (Fig. 3b) zu verifizieren. Ein Gestell 42 ist derart ausgebildet, dass es eine Auflage für den Einkaufskorb 41 bildet, die sich nicht auf dem Boden, sondern auf einer für den Bediener ergonomischen Höhe befindet. Das Gestell 42 umfasst einen oberen Teil der über den abgestellten Einkaufskorb 41 ragt. Im Gestell ist eine Auflageplatte 43 ausgebildet, auf der der Einkaufskorb 41 mit seiner Unterseite 57 abgestellt werden kann. Das Gestell 42 haltert mindestens eine Kamera 44, die derart positioniert ist, dass sie von einer offenen Seite des Einkaufskorbes 41 ein Bild des Inhalts des Einkaufskorb 41 machen kann. Die Verkaufsvorrichtung 40 umfasst ferner einen Sensor 45, der im Gestell 42 oder in der Auflageplatte 43 angebracht ist, und eine eindeutige Identifikationsnummer aus einem Datenträger 46 des Einkaufskorb 41 ausliest.

Die Verkaufsvorrichtung 40 umfasst eine Waage. Die Auflageplatte 43 bildet die Lastplatte der Waage und ist mechanisch mit der Krafteinleitungsseite einer im Gestell 42 untergebrachten Wägezelle 48 verbunden. Die Wägezelle 48 ist mit einer Gewichtswertverarbeitungsvorrichtung 54 verbunden, die aus den Signalen der Wägezelle 48 einen Gewichtswert des Einkaufskorbes 41 ermittelt und in einem Gewichtswertspeicher speichert. Auch in dieser Ausführungsform kann die Auflageplatte 43 von mehreren Wägezellen 48 gehalten sein. Da ein Einkaufskorb 41 nicht so schwer und nicht so groß ist wie ein Einkaufswagen 11 und die Auflageplatte 43 dementsprechend kleiner ausgestaltet ist als in den ersten beiden Ausführungsformen, ist eine Wägezelle 48 zur Gewichtsbestimmung in einer bevorzugten Ausführungsform ausreichend. Die Gewichtswertverarbeitungsvorrichtung 54 gibt denn Gewichtswert an eine Steuerung 52 weiter, die ihrerseits mit einer Kommunikationsvorrichtung 53 verbunden ist. Die Steuerung 52 steuert die Abläufe in der Verkaufsvorrichtung 40. Die Kommunikationsvorrichtung 53 ist mit einem Netzwerk 55 verbunden. Der obere Teil des Gestells 42 umfasst eine Ein-/Ausgabeeinheit 50. Die Ein-/Ausgabeeinheit 50 kann in den Rahmen des Gestells 42 integriert sein und ist zum Beispiel ein Touchscreen. An dem Gestell ist eine Bezahleinheit 50a angebracht. Die Bezahleinheit 50a kann auch in die Ein-/Ausgabeeinheit 50 integriert sein. Die Bezahleinheit 50a dient dem bargeldlosen Bezahlen an der Verkaufsvorrichtung 40. An dem Gestell 42 auf der Oberseite ist ferner eine Freigabeanzeigevorrichtung 51 angebracht. Die Anzeige des ersten und/oder zweiten Freigabeindikators kann zum Beispiel in Form eines Lichtsignals angezeigt werden.

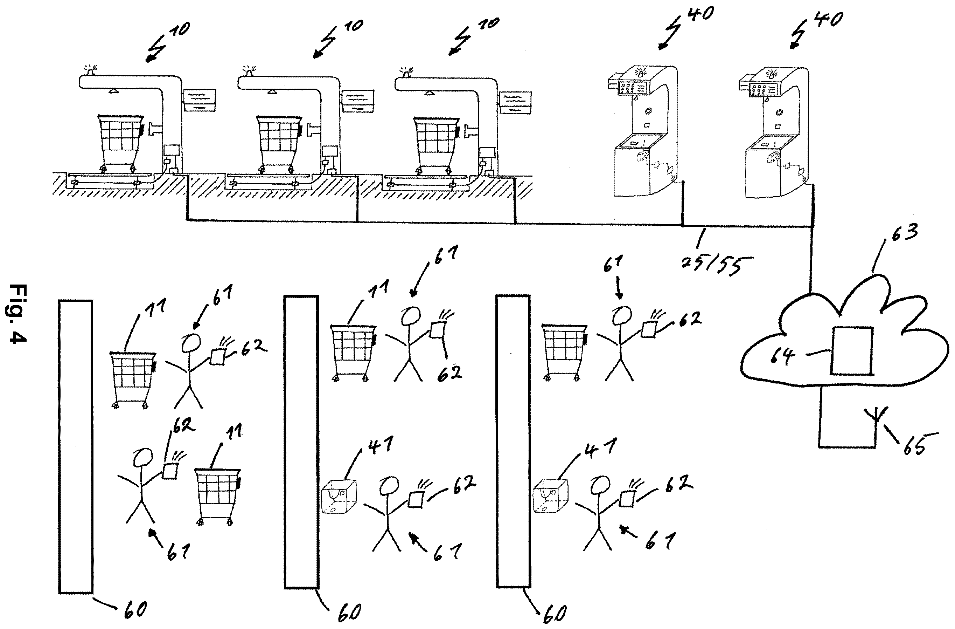

Fig. 4 zeigt ein System zum Selbst-Checkout in einem Supermarkt. Im Supermarkt sind eine Vielzahl von Kunden 61 vorhanden, die beim Selbst-Checkout an den Verkaufsvorrichtungen 10, 40 selbst zu Bedienern werden. Die Kunden 61 gehen mit einem Einkaufswagen 11 oder einem Einkaufskorb 41 an die Regale 60, um entsprechende Produkte zu entnehmen und sie in ihren Einkaufswagen 11 oder Einkaufskorb 41 zu legen. Dabei hat jeder Kunde einen Produktscanner 62 zur Hand, mit dem er jedes Produkt einscannt, bevor er es in den Einkaufswagen 11 oder den Einkaufskorb 41 legt. Jeder Produktscanner 62 übermittelt drahtlos jedes eingescannte Produkt sowie eine Identifikationsnummer des Einkaufswagens 11 oder des Einkaufskorbes 41, dem der Produktscanner 62 zugeordnet ist, an ein Netzwerk 63. Sowohl Produktscanner 62 wie auch Netzwerk 63 sind in der Lage miteinander drahtlos zu kommunizieren. Der Produktscanner 62 und das Netzwerk 63 sind in einer Ausführungsform ein lokales Netzwerk mit einem angepassten Produktscanner 62. In einer Ausführungsform ist der Produktscanner 62 ein Smartphone, auf dem eine entsprechende App läuft. Das Smartphone 62 ist über ein öffentliches Mobilfunknetz 65 oder ein WLAN des Supermarkts 65 mit dem Netzwerk 63 verbunden. In einer Ausführungsform ist das Netzwerk 63 eine Computing Cloud, das heißt ein Cloud Netzwerk. Der Supermarkt umfasst eine oder mehrere Verkaufsvorrichtungen 10, die für einen Selbst-Checkout mit einem Einkaufswagen 11 geeignet sind und die im Detail in den Figuren 1, 2a und 2b gezeigt sind. Der Supermarkt umfasst alternativ oder zusätzlich eine oder mehrere Verkaufsvorrichtungen 40, die für den Selbst-Checkout mit einem Einkaufskorb 41 geeignet sind und die im Detail in Fig. 3 gezeigt sind. Die Verkaufsvorrichtungen 10, 40 sind über ein Netzwerk 25, 55 mit der Computing Cloud 63 verbunden. Die Computing Cloud 63 umfasst eine Verifikationseinheit 64, die von den Verkaufsvorrichtung 10, 40 über das Netzwerk 25, 55 Bilder und Gewichtswerte, die zu einer Identifikationsnummer eines Einkaufswagens 11 oder eines Einkaufskorbes 41 gehören, übermittelt bekommt. Zu dieser Identifikationsnummer hat die Computing Cloud 63 über das drahtlose Netzwerk 65 von den entsprechenden Produktscannern 62 eine Liste von Produkten übermittelt bekommen, die sich im Einkaufswagen 11 oder im Einkaufskorb 41 befinden sollten. Die Verifikationseinheit 64 überprüft Bilder und Gewichtswerte, die einer gewissen Identifikationsnummer zugehören, mit einer Liste von Produkten, die mit dieser Identifikationsnummer assoziiert sind. Dabei wird geprüft, ob jedes Produkt, auf das aufgrund der Bilder und der Gewichtswerte rückgeschlossen werden kann, sich auch auf der Liste der Produkte befindet. Anders ausgedrückt wird ein Plausibilitätstest in der Verifikationseinheit 64 gemacht, ob der Kunde 61 alle Produkte eingescannt hat. Ist dies der Fall, so erzeugt die Verifikationseinheit 64 ein Freigabesignal, das über das Netzwerk 25, 55 an die entsprechende Verkaufsvorrichtungen 10, 40 übertragen wird.

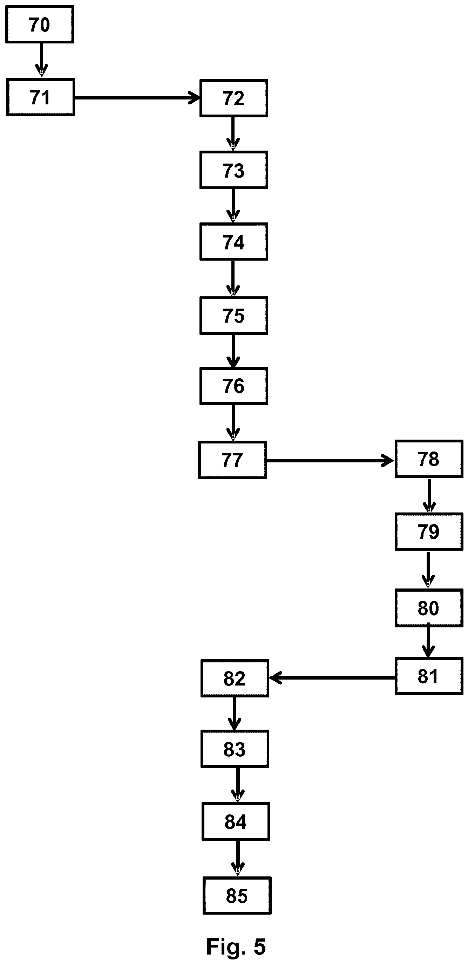

Fig. 5 zeigt schematisch ein Verfahren zum Selbst-Checkout in einem Supermarkt. Die Verfahrensschritte werden teileweise vom Kunden, teilweise von einer erfinderischen Verkaufsvorrichtung 10, 40 und teilweise in einem dazugehörigen Netzwerk 63, insbesondere in einer Computing Cloud 63, ausgeführt. Die Schritte auf der linken Seite werden vom Kunden während des Einkaufs ausgeführt. Die Schritte in der Mitte werden von der Verkaufsvorrichtung 10, 40 ausgeführt. Die Schritte auf der rechten Seite werden von der Computing Cloud 63 ausgeführt.

Beim Selbst-Checkout in einem Supermarkt ist der Kunde dafür zuständig, seine Einkäufe selbst aus den Regalen 60 zu nehmen, sie einzuscannen, das heißt die Produkte selbst zu erfassen und zum Abschließen des Einkaufs die Produkte an einer Verkaufsvorrichtung 10, 40 zum Selbst-Checkout selbst zu verifizieren und zu bezahlen. Der Supermarkt kann somit auf Kassenpersonal verzichten. Der Kunde ersetzt das Kassenpersonal und ist somit selbst Bediener der Selbst-Checkout Verkaufsvorrichtung 10, 40. In einem ersten Schritt 70 nimmt sich ein Kunde einen Einkaufswagen 11 oder Einkaufskorb 41 und scannt dessen Identifikationsnummer mit einem Produktscanner 62 ein. Somit ordnet der Kunde einen Einkaufswagen 11 oder Einkaufskorb 41 seinem Produktscanner 62 zu. In einer Ausführungsform ist der Produktscanner 63 ein RFID oder NFC fähiges Smartphone und der Datenträger 16, 46 an dem Einkaufswagen 11 oder dem Einkaufskorb ist ein RFID- oder NFC-Datenträger. Der Einscanvorgang in Schritt 70 erfolgt über diese Technologie. In einer Ausführungsform ist der Datenträger ein Platte mit einem Barcode oder QR-Code und der Einscanvorgang erfolgt optisch über die Smartphone Kamera.

Alle während des Verkaufsvorgangs mit diesem Produktscanner 62 eingescannte Produkte werden der Identifikationsnummer des Einkaufswagens 11 oder des Einkaufskorbes 41 zugeordnet. Im Schritt 71 geht der Kunde durch den Supermarkt und nimmt sich die gewünschten Produkte aus den Regalen 60. Der Kunde scannt jedes Produkt, das er aus den Regalen 60 entnimmt, mit dem Produktscanner 62 ein und legt es in seinen Einkaufswagen 11 oder Einkaufskorb 41. Der Produktscanner 62 übermittelt jeweils über ein drahtloses Netzwerk 65 die eingescannten Produkte. Eine Liste der eingescannten Produkte wird in dem Netzwerk, insbesondere in der Computing Cloud 63, erstellt und dem entsprechenden Produktscanner 62 und der damit assoziierten Identifikationsnummer zugeordnet. Sobald ein Kunde alle Produkte, die einkaufen möchte, eingesammelt hat, begibt er sich zu einer Verkaufsvorrichtung 10, 40. Er schiebt den Einkaufswagen 11 auf die Auflageplatte 13 der Verkaufsvorrichtung 10 oder legt den Einkaufskorb 41 auf die Auflageplatte 43 der Verkaufsvorrichtung 40. Die Verkaufsvorrichtung 10, 40 detektiert automatisch den Einkaufswagen 11 oder den Einkaufskorb 41 in Schritt 72. Im optionalen Schritt 73 fixiert die Verkaufsvorrichtung 10, 40 den Einkaufswagen 11 oder den Einkaufskorb 41 mit einem Greifer 17a, 17b automatisch. In Schritt 74 ermittelt die Verkaufsvorrichtung 10, 40 mit einem Sensor 15, 45 automatisch die eindeutige Identifikationsnummer des Einkaufswagens 11 oder des Einkaufskorbes 41. Im Schritt 75 erstellt die Verkaufsvorrichtung 10, 40 automatisch mindestens ein Bild mit mindestens einer Kamera 14, 44 von mindestens einer offenen Seite des Einkaufswagens 11 oder des Einkaufskorbes 41. Außerdem wird in Schritt 76 das Gewicht des Einkaufswagens 11 oder des Einkaufskorbes 41 mit einer Wägezelle 18, 48 und einer dazugehörigen Gewichtsverarbeitungsvorrichtung 24, 54 ermittelt. Die Schritte 74 bis 76 können gleichzeitig ausgeführt werden. Deren Reihenfolge kann auch verändert werden. Im Schritt 77 sendet die Verkaufsvorrichtung 10, 40 über ein Netzwerk 25, 55 die Identifikationsnummer, die erstellten Bilder und den ermittelten Gewichtswert an ein Netzwerk, insbesondere eine Computing Cloud 63. Im Schritt 78 empfängt die Computing Cloud 63 die gesendeten Daten. In der Computing Cloud 63 wurde während des Schritt 71 eine der Identifikationsnummer zugehörige Produktliste erstellt, die in Schritt 79 von der Verifikationseinheit 64 aus dem Speicher der Computing Cloud 63 ausgelesen wird. In Schritt 80 wird in der Verifikationseinheit 64 der Computing Cloud 63 der Einkauf verifiziert. Das heißt, die Produktliste mit den Produkten die erwartbar im Einkaufswagen 11 oder im Einkaufskorb 41 sein müssten, wird mit den empfangenen Bildern und mit dem Gewichtswert verglichen. Dabei erkennt die Verifikationseinheit 64 ob sich Produkte im Einkaufswagen 11 oder Einkaufskorb 41 befinden, die nicht auf der Produktliste stehen. Wird eine Abweichung erkannt, so entsteht eine Fehlermeldung, die an die Verkaufsvorrichtung im Schritt 81 gesendet wird und der Selbst-Checkoutvorgang muss abgebrochen werden und mithilfe eines Mitarbeiters des Supermarkts muss der Checkoutvorgang fortgesetzt werden. Die Verifikationseinheit sendet zu diesem Zweck eine Nicht-Freigabe. Bestätigt jedoch die Verifikationseinheit 64 im Schritt 80, dass die Produktliste, die Bilder und der Gewichtswert, die zu einer Identifikationsnummer gehören, übereinstimmen, so sendet die Verifikationseinheit 64 im Schritt 81 über das Netzwerk 25, 55 ein Freigabesignal an die Verkaufsvorrichtung 10, 40. Im Schritt 82 empfängt die Verkaufsvorrichtung 10, 40 ein Freigabesignal von der Computing Cloud 63. Im Schritt 83 zeigt die Verkaufsvorrichtung 10, 40 dem Bediener die Freigabe an und startet den Bezahlvorgang im Schritt 84. Ist der Bezahlvorgang erfolgreich abgeschlossen, so zeigt die Verkaufsvorrichtung 10, 40 eine zweite Freigabe an und gibt optional den Einkaufswagen 11 oder Einkaufskorb 41 aus dem Greifer frei. Der Kunde ist dann in der Lage mit seinem Einkauf den Supermarkt zu verlassen.

In einer Ausführungsform wird in Schritt 71 nicht jeder gescannte Artikel über das Netzwerk 65 an die Computing Cloud 63 geschickt. Die Liste der eingescannten Artikel wird im Produktscanner 62 erstellt. Sobald in der Computing Cloud 63 in Schritt 78 die Identifikationsnummer empfangen wird, fordert die Computing Cloud 63 in Schritt 79 über das Netzwerk 65 die vollständige Liste vom Produktscanner 62 an und empfängt diese.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. System zum Selbst-Checkout von Waren in einem Ladengeschäft, insbesondere in einem Supermarkt, wobei das System eine Vielzahl von Einkaufswagen (11) und/oder Einkaufskörben (41) umfasst, und wobei das System mindestens eine Verkaufsvorrichtung umfasst, wobei die mindestens eine Verkaufsvorrichtung eine Steuerung (22, 52) zum Steuern der Verkaufsvorrichtung (10, 40), eine Kommunikationsvorrichtung (23, 53) zum Empfangen und Senden von Daten aus einem und in ein Netzwerk (25, 55) und mindestens eine Kamera (14, 44) zum Erstellen eines Bildes von mindestens einer Ansicht einer offenen Seite eines Einkaufswagens (11) oder eines Einkaufskorbes (41) umfasst, wobei die mindestens eine Verkaufsvorrichtung (10, 40) eine Auflageplatte (13, 43) umfasst, die dazu ausgebildet ist, dass der Einkaufswagen (11) oder der Einkaufskorb (41) darauf abstellbar ist, **dadurch gekennzeichnet, dass** die mindestens eine Verkaufsvorrichtung (10, 40) einen Detektor und einen Sensor (15, 45) umfasst, wobei der Sensor (15, 45) automatisch eine eindeutige Identifikationsnummer des Einkaufswagens (11) oder des Einkaufskorbes (41) ermittelt, wenn der Detektor einen Einkaufswagen (11) oder einen Einkaufskorb (41) auf der Auflageplatte (13, 43) detektiert, und wobei das Netzwerk (25, 55, 63) eine Verifikationseinheit (64) umfasst, die ein Freigabesignal erzeugt, falls eine zu einer von der Verkaufsvorrichtung (10, 40) gesendeten Identifikationsnummer zugehörige Liste von Waren mit mindestens einem Bild von mindestens einer Ansicht einer offenen Seite eines Einkaufswagens sowie einem Gewichtswertes des Einkaufswagens übereinstimmt, wobei das mindestens eine Bild und der Gewichtswert von der Verkaufsvorrichtung ermittelt und übertragen werden,
wobei die Liste eine Liste von Waren ist, die sich in dem Einkaufswagen (11) oder dem Einkaufskorb (41) befinden müssten, wobei die Informationen über die Waren von einem mobilen Terminal (62), einzeln oder als Liste, über das Netzwerk (25, 55, 63) an die Verifikationseinheit (64) gesendet werden, wobei der Bediener mithilfe des mobilen Terminals (62) die Waren einscannt, die er während des Einkaufs auswählt.

2. System zum Selbst-Checkout nach Anspruch 1, **dadurch gekennzeichnet, dass** die Auflageplatte der mindestens einen Verkaufsvorrichtung eine Ruheposition für den Einkaufswagen oder den Einkaufskorb aufweist, und der Sensor geometrisch im Vergleich zur Auflageplatte derart positioniert an der Verkaufsvorrichtung angebracht ist, dass der Sensor die eindeutige Identifikationsnummer von einem Datenträger des Einkaufswagens oder Einkaufskorbes automatisch ausliest, sobald der Einkaufswagen oder der Einkaufskorb die Ruheposition auf der Auflageplatte erreicht hat.

3. System zum Selbst-Checkout nach Anspruch 1 oder 2, **dadurch gekennzeichnet, dass** die mindestens eine Verkaufsvorrichtung eine Waage zum Wiegen eines Einkaufswagens oder Einkaufskorbes umfasst, wobei die Waage den Gewichtswert ermittelt, insbesondere den Gewichtswert automatisch ermittelt, wenn der Detektor einen Einkaufswagen oder einen Einkaufskorb auf der Auflageplatte detektiert, und an einen Gewichtswertspeicher übergibt und wobei eine Lastplatte der Waage durch die Auflageplatte ausgebildet ist.

4. System zum Selbst-Checkout nach Anspruch 1 oder 2, **dadurch gekennzeichnet**, die mindestens eine Verkaufsvorrichtung eine Lesevorrichtung umfasst, die den Gewichtswert aus einem Einkaufswagen oder einem Einkaufskorb, der auf der Auflageplatte abgestellt ist, ausliest und an die Gewichtswertspeicher übergibt.

5. System zum Selbst-Checkout nach einem der Ansprüche 1 bis 4, **dadurch gekennzeichnet, dass** die Kommunikationseinrichtung der mindestens einen Verkaufsvorrichtung die Identifikationsnummer des Einkaufswagens oder des Einkaufskorbes und mindestens ein Kamerabild und/oder das Gewicht aus dem Gewichtswertspeicher an das Netzwerk sendet und vom Netzwerk ein zur Identifikationsnummer zugehöriges Freigabesignal empfängt.

6. System zum Selbst-Checkout nach einem der Ansprüche 1 bis 5, **dadurch gekennzeichnet, dass** die mindestens eine Verkaufsvorrichtung eine Bezahleinheit zum Bezahlen, insbesondere zum bargeldlosen Bezahlen, umfasst.

7. System zum Selbst-Checkout nach einem der Ansprüche 1 bis 6, **dadurch gekennzeichnet, dass** die mindestens eine Verkaufsvorrichtung eine Freigabeeinheit umfasst, die einen Freigabeindikator steuert und der Freigabeindikator eine Freigabe anzeigt, falls ein zur Identifikationsnummer zugehöriges Freigabesignal vom Netzwerk empfangen wurde und der Freigabeindikator eine Nicht-Freigabe anzeigt, falls ein zur Identifikationsnummer zugehöriges Freigabesignal nicht empfangen wurde, und wobei der Freigabeindikator insbesondere auf der Bezahleinheit angezeigt wird.

8. System zum Selbst-Checkout nach Anspruch 7, **dadurch gekennzeichnet, dass** die Freigabeeinheit der mindestens einen Verkaufsvorrichtung einen zweistufigen Freigabeindikator steuert, wobei die erste Stufe des Freigabeindikators eine Freigabe anzeigt, falls ein zur Identifikationsnummer zugehöriges Freigabesignal vom Netzwerk empfangen wurde und die erste Stufe des Freigabeindikators eine Nicht-Freigabe anzeigt, falls ein zur Identifikationsnummer zugehöriges Freigabesignal nicht empfangen wurde und die zweite Stufe des Freigabeindikators eine Freigabe anzeigt, falls ein Bezahlvorgang erfolgreich abgeschlossen wurde und die zweite Stufe des Freigabeindikators eine Nicht-Freigabe anzeigt, falls ein Bezahlvorgang nicht erfolgreich abgeschlossen wurde, und wobei mindestens einer der beiden Freigabeindikatoren insbesondere auf der Bezahleinheit angezeigt wird.

9. System zum Selbst-Checkout nach einem der Ansprüche 1 bis 8, **dadurch gekennzeichnet, dass** die mindestens eine Verkaufsvorrichtung einen Greifer umfasst, der den Einkaufswagen oder den Einkaufskorb auf der Auflageplatte automatisch fixiert, wenn der Einkaufswagen oder Einkaufskorb in der Verkaufsvorrichtung durch den Detektor detektiert wird, und wobei der Greifer den Einkaufswagen oder Einkaufskorb erst freigibt, wenn die Freigabeeinheit ein zur Identifikationsnummer zugehöriges Freigabesignal vom Netzwerk empfangen hat und/oder wenn die Bezahleinheit das erfolgreiche Beenden eines Bezahlvorgangs festgestellt hat.

10. Verfahren zum Betrieb einer Verkaufsvorrichtung zum Selbst-Checkout in einem Ladengeschäft, insbesondere in einem Supermarkt, wobei das Verfahren folgende Schritte umfasst:
- detektieren (72) eines Einkaufswagens (11) oder eines Einkaufskorbes (41) auf einer Auflageplatte (13, 43) mit einem Detektor,
- ermitteln (74) einer eindeutigen Identifikationsnummer des Einkaufswagens (11) oder des Einkaufskorbes (41) mit einem Sensor (15, 45),
- erstellen (75) mindestens eines Bildes von mindestens einer Ansicht einer offenen Seite des Einkaufswagens (11) oder des Einkaufskorbes (41) mit einer Kamera (14, 44),
- senden (77) mit einer Kommunikationsvorrichtung (23, 53) an eine Computing Cloud (63) der eindeutigen Identifikationsnummer, eines ermittelten Gewichts des Einkaufswagens und des mindestens einen Bildes der mindestens einen offenen Seite des Einkaufswagens (11) oder des Einkaufskorbes (41), und
- empfangen (82) mit der Kommunikationsvorrichtung (23, 53) von der Computing Cloud (63) von einem zu der eindeutigen Identifikationsnummer zugehörigen Freigabesignal,
wobei die Computing Cloud (63) eine Verifikationseinheit (64) umfasst und wobei die Computing Cloud (63) folgende Schritte ausführt:
- empfangen (78) der durch die Kommunikationsvorrichtung (23, 53) gesendeten Daten,
- auslesen (79) von der Verifikationseinheit (64) aus einem Speicher der Computing Cloud (63) einer der empfangenen Identifikationsnummer zugehörigen Produktliste,
- verifizieren (80) des Einkaufs durch die Verifikationseinheit (64),
- senden (81) eines zu der eindeutigen Identifikationsnummer zugehörigen Freigabesignals wobei das Freigabesignal erzeugt wird, falls die Produktliste mit dem mindestens einem Bild von mindestens einer Ansicht einer offenen Seite eines Einkaufswagens sowie des Gewichtswertes des Einkaufswagens übereinstimmt, wobei die Produktliste eine Liste von Waren ist, die sich in dem Einkaufswagen oder dem Einkaufskorb befinden müssten, wobei die Informationen über die Waren von einem mobilen Terminal, einzeln oder als Liste, über ein Netzwerk an die Verifikationseinheit gesendet werden, wobei der Bediener mithilfe des mobilen Terminals die Waren einscannt, die er während des Einkaufs auswählt.

11. Verfahren zum Betrieb einer Verkaufsvorrichtung nach Anspruch 10, **dadurch gekennzeichnet, dass** es folgende Schritte umfasst:
- automatisches ermitteln des Gewichtswertes des Einkaufswagens oder des Einkaufskorbes mit einer Waage, deren Lastplatte die Auflageplatte ist.

12. Verfahren zum Betrieb einer Verkaufsvorrichtung nach Anspruch 10, **dadurch gekennzeichnet, dass** es folgende Schritte umfasst:
- auslesen des Gewichtswertes aus dem Einkaufswagen oder dem Einkaufskorb, der auf der Auflageplatte abgestellt ist.

13. Verfahren zum Betrieb einer Verkaufsvorrichtung nach einem der Ansprüche 10 bis 12, **dadurch gekennzeichnet, dass** es folgende Schritte umfasst:
- anzeigen einer Freigabe mit einem zweistufigen Freigabeindikator, wobei die erste Stufe des Freigabeindikators eine Freigabe anzeigt, falls ein zur Identifikationsnummer zugehöriges Freigabesignal vom Netzwerk empfangen wurde und die erste Stufe des Freigabeindikators eine Nicht-Freigabe anzeigt, falls ein zur Identifikationsnummer zugehöriges Freigabesignal nicht empfangen wurde und die zweite Stufe des Freigabeindikators eine Freigabe anzeigt, falls ein Bezahlvorgang erfolgreich abgeschlossen wurde und die zweite Stufe des Freigabeindikators eine Nicht-Freigabe anzeigt, falls ein Bezahlvorgang nicht erfolgreich abgeschlossen wurde.

14. Verfahren zum Betrieb einer Verkaufsvorrichtung nach einem der Ansprüche 10 bis 13, **dadurch gekennzeichnet, dass** es folgende Schritte umfasst:
- automatisches fixieren des Einkaufswagens oder des Einkaufskorbes auf der Auflageplatte insbesondere in einer Ruheposition auf der Auflageplatte, mit einem Greifer,
- freigeben des Einkaufswagens oder Einkaufskorbes durch den Greifer, wenn die Freigabeeinheit ein zur Identifikationsnummer zugehöriges Freigabesignal vom Netzwerk empfangen hat und insbesondere wenn die Bezahleinheit das erfolgreiche Beenden eines Bezahlvorgangs festgestellt hat.

## Claims

1. System for self-checkout of goods in a store, in particular in a supermarket, wherein the system comprises a plurality of shopping carts (11) and/or shopping baskets (41), and wherein the system comprises at least one sales device, wherein the at least one sales device comprises a controller (22, 52) for controlling the sales device (10, 40), a communication device (23, 53) for receiving and transmitting data from and into a network (25, 55) and at least one camera (14, 44) for creating an image of at least one view of an open side of a shopping cart (11) or a shopping basket (41), wherein the at least one sales device (10, 40) comprises a support plate (13, 43) designed to the effect that the shopping cart (11) or the shopping basket (41) is placeable thereon, **characterized in that** the at least one sales device (10, 40) comprises a detector and a sensor (15, 45), wherein the sensor (15, 45) automatically determines a unique identification number of the shopping cart (11) or the shopping basket (41) if the detector detects a shopping cart (11) or a shopping basket (41) on the support plate (13, 43), and wherein the network (25, 55, 63) comprises a verification unit (64), which generates a release signal if a list of goods associated with an identification number transmitted by the sales device (10, 40) corresponds to at least one image of at least one view of an open side of a shopping cart and a weight value of the shopping cart, wherein the at least one image and the weight value are determined and transferred by the sales device, wherein the list is a list of goods which should be situated in the shopping cart (11) or the shopping basket (41), wherein the items of information about the goods are transmitted from a mobile terminal (62), individually or as a list, via the network (25, 55, 63) to the verification unit (64), wherein the operator uses the mobile terminal (62) to scan the goods selected by the operator during shopping.

2. System for self-checkout according to Claim 1, **characterized in that** the support plate of the at least one sales device has a rest position for the shopping cart or the shopping basket, and the sensor is mounted on the sales device so as to be positioned geometrically in comparison with the support plate such that the sensor automatically reads the unique identification number from a data carrier of the shopping cart or shopping basket as soon as the shopping cart or the shopping basket has reached the rest position on the support plate.

3. System for self-checkout according to Claim 1 or 2, **characterized in that** the at least one sales device comprises a scale for weighing a shopping cart or shopping basket, wherein the scale determines the weight value, in particular automatically determines the weight value, if the detector detects a shopping cart or a shopping basket on the support plate, and transfers the weight value to a weight value memory, and wherein a load plate of the scale is formed by the support plate.

4. System for self-checkout according to Claim 1 or 2, **characterized in that** the at least one sales device comprises a read device, which reads the weight value from a shopping cart or shopping basket placed on the support plate and transfers the weight value to the weight value memory.

5. System for self-checkout according to any of Claims 1 to 4, **characterized in that** the communication device of the at least one sales device transmits the identification number of the shopping cart or the shopping basket and at least one camera image and/or the weight from the weight value memory to the network and receives from the network a release signal associated with the identification number.

6. System for self-checkout according to any of Claims 1 to 5, **characterized in that** the at least one sales device comprises a payment unit for payment, in particular for cashless payment.

7. System for self-checkout according to any of Claims 1 to 6, **characterized in that** the at least one sales device comprises a release unit, which controls a release indicator, and the release indicator indicates release if a release signal associated with the identification number has been received from the network, and the release indicator indicates non-release if a release signal associated with the identification number has not been received, and wherein the release indicator is indicated on the payment unit, in particular.

8. System for self-checkout according to Claim 7, **characterized in that** the release unit of the at least one sales device controls a two-stage release indicator, wherein the first stage of the release indicator indicates release if a release signal associated with the identification number has been received from the network, and the first stage of the release indicator indicates non-release if a release signal associated with the identification number has not been received, and the second stage of the release indicator indicates release if a payment process has been successfully concluded, and the second stage of the release indicator indicates non-release if a payment process has not been successfully concluded, and wherein at least one of the two release indicators is indicated on the payment unit, in particular.

9. System for self-checkout according to any of Claims 1 to 8, **characterized in that** the at least one sales device comprises a gripper, which automatically fixes the shopping cart or the shopping basket on the support plate if the shopping cart or shopping basket is detected in the sales device by the detector, and wherein the gripper only releases the shopping cart or shopping basket if the release unit has received a release signal associated with the identification number from the network and/or if the payment unit has ascertained the successful ending of a payment process.

10. Method for operating a sales device for self-checkout in a store, in particular in a supermarket, wherein the method comprises the following steps:
- detecting (72) a shopping cart (11) or a shopping basket (41) on a support plate (13, 43) by means of a detector,
- determining (74) a unique identification number of the shopping cart (11) or the shopping basket (41) by means of a sensor (15, 45),
- creating (75) at least one image of at least one view of an open side of the shopping cart (11) or the shopping basket (41) by means of a camera (14, 44),
- transmitting (77) the unique identification number, a determined weight of the shopping cart and the at least one image of the at least one open side of the shopping cart (11) or the shopping basket (41) to a computing cloud (63) by means of a communication device (23, 53), and
- receiving (82) a release signal associated with the unique identification number from the computing cloud (63) by means of the communication device (23, 53), wherein the computing cloud (63) comprises a verification unit (64) and wherein the computing cloud (63) performs the following steps:
- receiving (78) the data transmitted by the communication device (23, 53),
- reading (79) a product list associated with the received identification number from a memory of the computing cloud (63) by the verification unit (64),
- verifying (80) the shopping by means of the verification unit (64),
- transmitting (81) a release signal associated with the unique identification number, wherein the release signal is generated if the product list corresponds to the at least one image of at least one view of an open side of a shopping cart and the weight value of the shopping cart, wherein the product list is a list of goods which should be situated in the shopping cart or the shopping basket, wherein the items of information about the goods are transmitted from a mobile terminal, individually or as a list, via a network to the verification unit, wherein the operator uses the mobile terminal to scan the goods selected by the operator during shopping.

11. Method for operating a sales device according to Claim 10, **characterized in that** it comprises the following steps:
- automatically determining the weight value of the shopping cart or the shopping basket by means of a scale, the load plate of which is the support plate.

12. Method for operating a sales device according to Claim 10, **characterized in that** it comprises the following steps:
- reading the weight value from the shopping cart or the shopping basket placed on the support plate.

13. Method for operating a sales device according to any of Claims 10 to 12, **characterized in that** it comprises the following steps:
- indicating release by means of a two-stage release indicator, wherein the first stage of the release indicator indicates release if a release signal associated with the identification number has been received from the network, and the first stage of the release indicator indicates non-release if a release signal associated with the identification number has not been received, and the second stage of the release indicator indicates release if a payment process has been successfully concluded, and the second stage of the release indicator indicates non-release if a payment process has not been successfully concluded.

14. Method for operating a sales device according to any of Claims 10 to 13, **characterized in that** it comprises the following steps:
- automatically fixing the shopping cart or the shopping basket on the support plate in particular in a rest position on the support plate, by means of a gripper,
- releasing the shopping cart or shopping basket by means of the gripper if the release unit has received a release signal associated with the identification number from the network and in particular if the payment unit has ascertained the successful ending of a payment process.

## Revendications

1. Système de caisse en libre-service de marchandises dans un magasin de détail, notamment dans un supermarché, le système comportant une pluralité de chariots d'achat (11) et/ou de paniers d'achat (41), et le système comportant au moins un dispositif de vente, l'au moins un dispositif de vente comportant une commande (22, 52) destinée à commander le dispositif de vente (10, 40), un dispositif de communication (23, 53) destiné à recevoir et à émettre des données depuis un et dans un réseau (25, 55) et au moins une caméra (14, 44) destinée à créer une image d'au moins une vue d'un côté ouvert d'un chariot d'achat (11) ou d'un panier d'achat (41), l'au moins un dispositif de vente (10, 40) comportant un plateau de dépose (13, 43), lequel est configuré pour que le chariot d'achat (11) ou le panier d'achat (41) puisse être déposé sur celui-ci, **caractérisé en ce que** l'au moins un dispositif de vente (10, 40) comprend un détecteur et un capteur (15, 45), le capteur (15, 45) déterminant automatiquement un numéro d'identification univoque du chariot d'achat (11) ou du panier d'achat (41) lorsque le détecteur détecte un chariot d'achat (11) ou un panier d'achat (41) sur le plateau de dépose (13, 43), et le réseau (25, 55, 63) comportant une unité de vérification (64) qui génère un signal de libération dans le cas où une liste de marchandises associées à un numéro d'identification envoyé par le dispositif de vente (10, 40) coïncide avec au moins une image d'au moins une vue d'un côté ouvert d'un chariot d'achat ainsi qu'une valeur de poids du chariot d'achat, l'au moins une image et la valeur de poids étant déterminées et transmises par le dispositif de vente,
la liste étant une liste de marchandises qui devaient se trouver dans le chariot d'achat (11) ou le panier d'achat (41), les informations à propos des marchandises étant envoyées à l'unité de vérification (64) par un terminal mobile (62), individuellement ou sous forme de liste, par le biais du réseau (25, 55, 63), l'opérateur lisant par balayage, à l'aide du terminal mobile (62), les marchandises qu'il sélectionne pendant l'achat.

2. Système de caisse en libre-service selon la revendication 1, **caractérisé en ce que** le plateau de dépose de l'au moins un dispositif de vente présente une position de repos pour le chariot d'achat ou le panier d'achat, et le capteur est monté sur le dispositif de vente en étant positionné géométriquement en comparaison du plateau de dépose de telle sorte que le capteur lit automatiquement le numéro d'identification univoque depuis un support de données du chariot d'achat ou du panier d'achat dès que le chariot d'achat ou le panier d'achat a atteint la position de repos sur le plateau de dépose.

3. Système de caisse en libre-service selon la revendication 1 ou 2, **caractérisé en ce que** l'au moins un dispositif de vente comporte une balance pour peser un chariot d'achat ou un panier d'achat, la balance déterminant la valeur de poids, notamment déterminant automatiquement la valeur de poids, lorsque le détecteur détecte un chariot d'achat ou un panier d'achat sur le plateau de dépose, et la transférant à une mémoire de valeurs de poids et un plateau de charge de la balance étant formée par le plateau de dépose.

4. Système de caisse en libre-service selon la revendication 1 ou 2, **caractérisé en ce que** l'au moins un dispositif de vente comporte dispositif de lecture, qui lit la valeur de poids à partir d'un chariot d'achat ou d'un panier d'achat qui est déposé sur le plateau de dépose et la transfère à la mémoire de valeurs de poids.

5. Système de caisse en libre-service selon l'une des revendications 1 à 4, **caractérisé en ce que** le dispositif de communication de l'au moins un dispositif de vente envoie le numéro d'identification du chariot d'achat ou du panier d'achat et au moins une image de caméra et/ou le poids depuis la mémoire de valeurs de poids au réseau et reçoit de la part du réseau un signal de libération associé au numéro d'identification.

6. Système de caisse en libre-service selon l'une des revendications 1 à 5, **caractérisé en ce que** l'au moins un dispositif de vente comporte une unité de paiement servant au paiement, notamment au paiement sans espèces.

7. Système de caisse en libre-service selon l'une des revendications 1 à 6, **caractérisé en ce que** l'au moins un dispositif de vente comporte une unité de libération, qui commande un indicateur de libération et l'indicateur de libération indique une libération dans le cas où un signal de libération associé au numéro d'identification a été reçu du réseau et l'indicateur de libération indique une non-libération dans le cas où un signal de libération associé au numéro d'identification n'a pas été reçu, et l'indicateur de libération étant notamment affiché sur l'unité de paiement.

8. Système de caisse en libre-service selon la revendication 7, **caractérisé en ce que** l'unité de libération de l'au moins un dispositif de vente commande un indicateur de libération à deux niveaux, le premier niveau de l'indicateur de libération affichant une libération dans le cas où un signal de libération associé au numéro d'identification a été reçu du réseau et le premier niveau de l'indicateur de libération indiquant une non-libération dans le cas où un signal de libération associé au numéro d'identification n'a pas été reçu, et le deuxième niveau de l'indicateur de libération affichant une libération dans le cas où une opération de paiement a été clôturée avec succès et le deuxième niveau de l'indicateur de libération affichant une non-libération dans le cas où une opération de paiement n'a pas été clôturée avec succès, et au moins l'un des deux indicateurs de libération étant affiché sur l'unité de paiement.

9. Système de caisse en libre-service selon l'une des revendications 1 à 8, **caractérisé en ce que** l'au moins un dispositif de vente comporte un préhenseur, lequel bloque automatiquement le chariot d'achat ou le panier d'achat sur le plateau de dépose lorsque le chariot d'achat ou le panier d'achat dans le dispositif de vente est détecté par le détecteur, et le préhenseur ne libère le chariot d'achat ou le panier d'achat que lorsque l'unité de libération a reçu du réseau un signal de libération associé au numéro d'identification et/ou lorsque l'unité de paiement a constaté l'achèvement réussi d'une opération de paiement.

10. Procédé pour faire fonctionner un dispositif d'achat destiné à l'encaissement en libre-service dans un magasin de détail, notamment dans un supermarché, le procédé comprenant les étapes suivantes :
- détection (72) d'un chariot d'achat (11) ou d'un panier d'achat (41) sur un plateau de dépose (13, 43) avec un détecteur,
- détermination (74) d'un numéro d'identification univoque du chariot d'achat (11) ou du panier d'achat (41) avec un capteur (15, 45),
- création (75) d'au moins une image d'au moins une vue d'un côté ouvert du chariot d'achat (11) ou du panier d'achat (41) avec une caméra (14, 44),
- envoi (77), avec un dispositif de communication (23, 53) à un nuage informatique (63), du numéro d'identification univoque, d'un poids déterminé du chariot d'achat et de l'au moins une image de l'au moins un côté ouvert du chariot d'achat (11) ou du panier d'achat (41), et
- réception (82), avec le dispositif de communication (23, 53) du nuage informatique (63), d'un signal de libération associé au numéro d'identification univoque, le nuage informatique (63) comportant une unité de vérification (64) et le nuage informatique (63) exécutant les étapes suivantes :
- réception (78) des données envoyées par le dispositif de communication (23, 53),
- lecture (79), par l'unité de vérification (64) depuis une mémoire du nuage informatique (63), d'une liste de produits associée au numéro d'identification reçu,
- vérification (80) de l'achat par l'unité de vérification (64),
- envoi (81) d'un signal de validation associé au numéro d'identification univoque, dans le cas où la liste de produits coïncide avec l'au moins une image d'au moins une vue d'un côté ouvert d'un chariot d'achat ainsi qu'une valeur de poids du chariot d'achat, la liste de produits étant une liste de marchandises qui devaient se trouver dans le chariot d'achat ou le panier d'achat, les informations à propos des marchandises étant envoyées à l'unité de vérification par un terminal mobile, individuellement ou sous forme de liste, par le biais d'un réseau, l'opérateur lisant par balayage, à l'aide du terminal mobile, les marchandises qu'il sélectionne pendant l'achat.

11. Procédé pour faire fonctionner un dispositif d'achat selon la revendication 10, **caractérisé en ce qu'**il comprend les étapes suivantes :
- détermination automatique de la valeur de poids du chariot d'achat ou du panier d'achat avec une balance dont le plateau de charge est le plateau de dépose.

12. Procédé pour faire fonctionner un dispositif d'achat selon la revendication 10, **caractérisé en ce qu'**il comprend les étapes suivantes :
- lecture de la valeur de poids depuis le chariot d'achat ou le panier d'achat qui est déposé sur le plateau de dépose.

13. Procédé pour faire fonctionner un dispositif d'achat selon l'une des revendications 10 à 12, **caractérisé en ce qu'**il comprend les étapes suivantes :
- affichage d'une libération avec un indicateur de libération à deux niveaux, le premier niveau de l'indicateur de libération affichant une libération dans le cas où un signal de libération associé au numéro d'identification a été reçu du réseau et le premier niveau de l'indicateur de libération indiquant une non-libération dans le cas où un signal de libération associé au numéro d'identification n'a pas été reçu, et le deuxième niveau de l'indicateur de libération affichant une libération dans le cas où une opération de paiement a été clôturée avec succès et le deuxième niveau de l'indicateur de libération affichant une non-libération dans le cas où une opération de paiement n'a pas été clôturée avec succès.

14. Procédé pour faire fonctionner un dispositif d'achat selon l'une des revendications 10 à 13, **caractérisé en ce qu'**il comprend les étapes suivantes :
- blocage automatique du chariot d'achat ou du panier d'achat sur le plateau de dépose avec un préhenseur,
- libération du chariot d'achat ou du panier d'achat par le préhenseur lorsque l'unité de libération a reçu du réseau un signal de libération associé au numéro d'identification et notamment lorsque l'unité de paiement a constaté l'achèvement réussi d'une opération de paiement.
